# FASCICULE DE BREVET EUROPEEN

(11) **EP 4 491 512 B1**
(45) Date de publication et mention de la délivrance du brevet: **07.05.2025**
(21) Numéro de dépôt: 24167848.1
(22) Date de dépôt: 29.03.2024
(51) Int. Cl.: B64C 25/50, B64C 27/04

(54) **ATTERRISSEUR PIVOTABLE MUNI D'UN SYSTÈME D'IMMOBILISATION**
SCHWENKBARES FAHRWERK MIT EINEM FESTSTELLSYSTEM
PIVOTING LANDING GEAR PROVIDED WITH AN IMMOBILISATION SYSTEM

(30) Priorité: 10.07.2023 FR 2307363
(43) Date de publication de la demande: 15.01.2025
(73) Titulaire: Airbus Helicopters, 13725 Marignane Cedex (FR)
(72) Inventeur: BECQUET, Roland, 13590 MEYREUIL (FR)
(74) Mandataire: GPI Brevets

(56) Documents cités:
- EP-B1- 0 662 906
- GB-A- 970 425
- US-A- 2 384 054
- US-A- 2 502 522

## Description

La présente invention concerne un atterrisseur pivotable muni d'un système d'immobilisation.

Un train d'atterrissage d'un aéronef, et par exemple d'un giravion voire d'un hélicoptère, peut comprendre au moins un atterrisseur pivotable. Un tel atterrisseur pivotable peut comprendre un ensemble portant au moins un organe de contact avec le sol, et pouvant pivoter à 360 degrés autour d'un axe de pivotement afin de faciliter le déplacement de l'aéronef sur le sol. Le terme « sol » désigne par la suite toute surface sur laquelle un aéronef peut se poser, telle qu'une surface terrestre, le toit d'un immeuble, le pont d'un navire...

Par exemple, un giravion tricycle peut comprendre deux atterrisseurs principaux et un atterrisseur auxiliaire comprenant chacun au moins une roue. Les deux atterrisseurs principaux ne sont pas pivotables. En revanche, l'atterrisseur auxiliaire est pivotable pour assurer la manœuvrabilité de l'aéronef au sol. La ou les roues de l'atterrisseur auxiliaire sont, au sol, libres en pivotement autour d'un axe de pivotement qui est distinct du ou des axes de rotation des roues. Sur un hélicoptère muni d'un système de contrôle de l'angle de lacet, par exemple du type comprenant un rotor arrière, un virage peut être entrepris au sol en pilotant la poussée exercée par ce système de contrôle de l'angle de lacet. Le système de contrôle de l'angle de lacet génère un moment sur une cellule de l'aéronef portée par les atterrisseurs, ce moment faisant pivoter automatiquement l'atterrisseur auxiliaire pour orienter l'aéronef dans la direction requise.

Un tel atterrisseur pivotable est néanmoins muni usuellement d'un système d'immobilisation. Le système d'immobilisation verrouille, sur commande, l'atterrisseur pivotable dans une position générant un déplacement en ligne droite de l'aéronef. En effet, il est requis de verrouiller le pivotement de l'atterrisseur auxiliaire lors d'un atterrissage roulé avec panne moteur, ou encore lors du posé de l'aéronef sur une pente ou sur un pont de navire ou un équivalent.

Un système d'immobilisation connu comporte un pion apte à pénétrer dans un alésage d'un socle solidaire de l'ensemble pivotant d'un atterrisseur pivotable. De plus, le système d'immobilisation comporte une bielle élastique reliée au pion et à une commande. La commande peut comprendre une poignée reliée par un lien non élastique à la bielle élastique.

Pour placer le système d'immobilisation dans un mode déverrouillé, la commande est manœuvrée par un opérateur pour positionner la bielle élastique dans une première position. Le pion de verrouillage est alors en dehors de l'alésage. L'ensemble pivotant est par suite libre de pivoter autour d'un axe de pivotement.

Pour verrouiller l'atterrisseur pivotable, la commande est manœuvrée par un opérateur pour positionner la bielle élastique dans une deuxième position en la rapprochant de l'alésage.

Si le pion est au droit de l'alésage, ce pion pénètre dans l'alésage. Le système d'immobilisation est alors dans une phase verrouillée d'un mode verrouillé. L'ensemble pivotant n'est alors plus libre de pivoter à 360 degrés autour de l'axe de pivotement.

Si le pion n'est pas au droit de l'alésage alors le pion vient en butée contre le socle. La bielle élastique se comprime et tend à pousser le pion vers le socle. Le système d'immobilisation est alors dans une phase armée du mode verrouillé. L'ensemble pivotant est temporairement libre de pivoter autour de l'axe de pivotement. Dès que le pion atteint l'alésage, la bielle élastique se détend et pousse le pion dans cet alésage. Le système d'immobilisation passe ainsi automatiquement dans la phase verrouillée du mode verrouillé.

Un autre système d'immobilisation connu comporte un pion, non pas mobile en translation, mais en rotation.

De tels systèmes de verrouillage sont intéressants. Cependant, lorsque l'ensemble pivotant est dans la phase verrouillée et tend à pivoter, le socle exerce un effort de cisaillement sur le pion de verrouillage. Selon l'intensité de cet effort et le coefficient de friction entre le pion et le socle, le déverrouillage peut ne pas être possible. En particulier, en présence d'une poussée transversale importante générée par le système de contrôle de l'angle de lacet, l'effort de cisaillement peut être important. Si un pilote force et parvient néanmoins à déplacer la commande pour placer le système d'immobilisation dans le mode déverrouillé, l'aéronef peut être subitement déstabilisé.

Le document US3375999 A décrit un mécanisme de verrouillage libérable pour une roue pivotante. Ce mécanisme comprend une excroissance pouvant être reçue dans un cran entre deux bras de verrouillage. La roue est verrouillée au repos, et déverrouillée en présence d'un effort supérieur à un seuil. Ce système n'est donc pas adapté à la présente problématique.

Le document WO2010115893 A1 divulgue quant à lui un système comprenant un organe frotteur pour exercer un effort de friction entre deux éléments. Le système comporte des moyens de commande de variation de la précontrainte exercée par l'organe presseur sur l'organe frotteur.

Le document EP 662906 B1 décrit un moyen de verrouillage en rotation d'un atterrisseur muni d'un ensemble de goupille de verrouillage.

Le document CN104210654 A décrit un indicateur de blocage de roue comportant un pion mobile en translation par rapport à un logement et maintenu automatiquement en position au moyen d'un ressort de rappel.

Le document US2502522 A décrit un atterrisseur muni d'une base et d'un ensemble pivotant portant un organe de contact. L'atterrisseur a un système d'immobilisation qui comprend un pion et un passage ménagé dans la base. Par ailleurs, un système élastique comprend deux ressorts. Un premier ressort est disposé entre une plaque supérieure solidaire de l'ensemble pivotant et un collier solidaire du pion, alors qu'un deuxième ressort est disposé entre une plaque inférieure solidaire de l'ensemble pivotant et le collier.

Le document US 2384054 A décrit un atterrisseur rétractable muni d'un système comportant un câble passant autour d'une poulie pour rejoindre un pion de centrage.

Le document GB 970425 A décrit un atterrisseur muni d'un loquet pouvant être engagé dans des ouvertures d'une fourche portant une roue.

La présente invention a alors pour objet de proposer un atterrisseur muni d'un système d'immobilisation innovant pour limiter les risques d'apparition d'une déstabilisation subite.

L'invention vise ainsi un atterrisseur muni d'une base et d'un ensemble pivotant portant un organe de contact qui est configuré pour être en contact avec le sol, ledit ensemble pivotant étant mobile en rotation autour d'un axe de pivotement par rapport à la base, ledit atterrisseur ayant un système d'immobilisation comprenant un pion mobile et une commande configurée pour requérir une application d'un mode verrouillé ou d'un mode déverrouillé, le système d'immobilisation comprenant un passage ménagé dans un socle solidaire de l'ensemble pivotant, le pion étant en dehors dudit passage dans une phase déverrouillée du mode déverrouillé, le pion étant mobile dans ledit passage en azimut par rapport à l'axe de pivotement dans une phase verrouillée du mode verrouillé, le système d'immobilisation ayant un système élastique de verrouillage tendant à pousser/poussant le pion dans le passage dans le mode verrouillé, le pion étant poussé dans le mode verrouillé par le système élastique de verrouillage, soit contre le socle durant une phase armée du mode verrouillé tant que le pion ne pénètre pas dans le passage, soit dans le passage dès que le pion est en face du passage dans la phase verrouillée.

Le système d'immobilisation comporte un système élastique de déverrouillage configuré pour faire sortir ledit pion du passage lorsque le mode déverrouillé est commandé par la commande, le système élastique de déverrouillage étant taré pour autoriser une extraction du pion hors du passage uniquement en présence d'un effort de cisaillement entre le socle et le pion inférieur à un seuil.

Le système d'immobilisation est ainsi configuré pour immobiliser dans une plage prédéterminée de positions ledit ensemble pivotant par rapport à la base durant une phase verrouillée d'un mode verrouillé et pour autoriser sans limitation un pivotement de l'ensemble pivotant par rapport à la base durant une phase déverrouillée d'un mode déverrouillé.

L'expression « système d'immobilisation configuré pour immobiliser dans une plage prédéterminée de positions ledit ensemble pivotant par rapport à la base durant une phase verrouillée d'un mode verrouillé » signifie que l'ensemble pivotant peut pivoter dans la limite de l'espace présent en azimut, au regard de l'axe de pivotement, entre le socle et le pion lorsque le pion est dans le passage. En effet, le passage présente selon un arc de cercle, au regard de l'axe de pivotement, une dimension supérieure à une dimension du pion. Dès lors, le pion peut aisément pénétrer dans le passage, mais le socle présente une liberté restreinte de mouvement en azimut. En fonction de la position du pion dans le passage, le socle exerce ou n'exerce pas un effort de cisaillement sur le pion.

L'expression « le pion étant mobile dans ledit passage en azimut par rapport à l'axe de pivotement » signifie qu'un jeu sépare toujours le pion du socle selon un arc de cercle centré sur l'axe de pivotement. Ce jeu confère une liberté de mouvement au socle par rapport au pion, lorsque le pion est dans le passage, restreinte à la plage prédéterminée de positions, par exemple de l'ordre de 0.5 degré. Sur un aéronef, cet angle peut dépendre de la distance longitudinale entre des atterrisseurs fixes de l'aéronef et l'atterrisseur ayant l'ensemble pivotant de l'invention.

En plus des phases armée, verrouillée et déverrouillée de l'état de l'art, le système élastique de déverrouillage permet de créer une phase désarmée lors du passage du mode verrouillé au mode déverrouillé.

Si le socle exerce un effort de cisaillement inférieur au seuil sur le pion, le pion sort directement du passage, le système d'immobilisation passant directement dans la phase déverrouillée. L'ensemble pivotant est libre de pivoter autour de l'axe de pivotement, au moins sur 180 degrés par exemple, voire sur 360 degrés.

Si le socle exerce un effort de cisaillement supérieur ou égal au seuil sur le pion, par exemple en présence d'un rotor arrière générant un moment de lacet important sur une cellule de l'aéronef, le passage du mode verrouillé au mode déverrouillé induit une compression du système élastique de déverrouillage. Le système d'immobilisation passe dans une phase désarmée du mode déverrouillé. Ce système élastique de déverrouillage est taré pour ne pas pouvoir se détendre dans ces conditions. Autrement dit, la raideur selon l'axe de compression/détente du système élastique de déverrouillage est choisie pour obtenir le passage dans la phase déverrouillée dans les conditions souhaitées. Dès que l'effort de cisaillement devient inférieur au seuil, suite à un léger pivotement de l'ensemble pivotant, le système élastique de déverrouillage se détend et expulse automatiquement le pion hors du passage pour atteindre la phase déverrouillée.

Ainsi, le système élastique de déverrouillage empêche le déverrouillage en présence d'un effort de cisaillement important, synonyme sur un hélicoptère d'un moment important exercé sur la cellule. Ce système élastique de déverrouillage permet d'éviter un déplacement brutal lorsque le mode déverrouillé est commandé par un pilote. Le déverrouillage de l'atterrisseur peut ainsi uniquement intervenir dans des cas opérationnels précis. En cas d'effort de cisaillement élevé, le déverrouillage est interdit, même s'il est commandé par le pilote. Ainsi, le pilote pourra commander le déverrouillage quelle que soit la sollicitation en cisaillement du pion. Le déverrouillage sera effectif uniquement lorsque l'effort appliqué sur ce pion sera inférieur à un seuil d'effort prédéterminé. L'atterrisseur pivotant selon l'invention permet ainsi d'optimiser la sécurité.

L'atterrisseur selon l'invention peut présenter une ou plusieurs des caractéristiques qui suivent, prises seules ou en combinaison.

Selon une première alternative, le pion peut être mobile en translation par rapport au socle selon un axe de translation, par exemple parallèle à l'axe de pivotement.

La première alternative est ainsi applicable à un système comprenant un pion mobile en translation.

Par exemple, le système d'immobilisation peut comporter un support creux qui s'étend vers le socle selon l'axe de translation d'un fond jusqu'à une extrémité ouverte, l'extrémité ouverte étant agencée entre le fond et le socle, le pion comprenant une tête solidaire d'une tige de blocage, la tête étant présente dans le support creux et la tige de blocage sortant du support creux par l'extrémité ouverte au moins dans la phase verrouillée, le système élastique de verrouillage étant agencé entre le fond et la tête.

Le support guide la translation de la tête, et par suite du pion. La base peut aussi guider la translation du pion.

Le système élastique de verrouillage peut ainsi être comprimé lors du passage du mode déverrouillé au mode verrouillé alors que le pion n'est pas en face du passage. Le système d'immobilisation est alors dans une phase armée, le système élastique de verrouillage étant prêt à se détendre pour pousser le pion dans le passage.

Eventuellement, le système élastique de verrouillage peut comporter un ressort de verrouillage présentant une spire fixée au fond.

Selon une première variante de la première alternative, le support peut être mobile en translation par rapport à la base, ladite commande étant connectée au support.

Lors du passage du mode déverrouillé au mode verrouillé, le support passe d'une première position à une deuxième position. Si le pion n'est pas en face du passage, le support comprime le système élastique de verrouillage lors d'une phase armée éventuelle. Le pion est alors plaqué contre le support. Dès que le pion se trouve en face du passage, le système élastique de verrouillage se détend pour obtenir un passage automatique dans la phase verrouillée dès que possible.

Lors du passage du mode verrouillé au mode déverrouillé, le support passe de la deuxième position à la première position. Si le socle exerce un effort de cisaillement sur le pion supérieur ou égal au seuil, le pion reste en place et le support comprime le système élastique de déverrouillage lors d'une phase désarmée éventuelle. Dès que l'effort de cisaillement sur le pion devient inférieur au seuil, le système élastique de déverrouillage se détend pour obtenir un passage automatique dans la phase déverrouillée.

La première variante de la première alternative peut ainsi être relativement simple et aisée à mettre en œuvre.

Eventuellement, le système élastique de déverrouillage peut être agencé entre la tête et un épaulement interne du support, la tige de blocage traversant l'épaulement interne, l'épaulement interne étant situé entre la tête et le socle.

Eventuellement, le système élastique de déverrouillage peut comporter un ressort de déverrouillage présentant une spire fixée à l'épaulement interne.

Selon une deuxième variante de la première alternative, le support peut être immobile par rapport à la base, le pion comprenant une tige d'entrée solidaire de la tête et traversant le fond du support.

Par exemple, la tige d'entrée s'étend de la tête jusqu'à un sommet solidaire d'un tube creux, ladite commande comportant un câble qui s'étend jusqu'à une plaque mobile en translation dans le tube creux en traversant une paroi du tube, le système élastique de déverrouillage étant agencé entre ladite paroi et ladite plaque.

En outre, le système élastique de déverrouillage peut présenter une raideur selon l'axe de translation supérieure à une raideur selon l'axe de translation du système élastique de verrouillage. Ainsi le système élastique de déverrouillage se détend lorsque le pion est libéré par le socle.

La deuxième variante de la première alternative peut aussi être relativement simple et aisée à mettre en œuvre.

En outre, le système élastique de déverrouillage peut présenter une raideur selon l'axe de translation supérieure à une raideur selon l'axe de translation du système élastique de verrouillage, en particulier mais pas seulement selon la deuxième variante de la première alternative. Ainsi le système élastique de déverrouillage se détend lorsque le pion est libéré par le socle.

Selon une deuxième alternative, le pion présente, par rapport à la base, non pas un degré de liberté en translation mais un degré de liberté en rotation.

Par exemple, le pion peut être porté par un levier en liaison pivot avec la base, le système élastique de verrouillage étant agencé entre la base et le levier, la commande comprenant un câble connecté à un plateau mobile en translation dans un guide, le guide étant connecté au levier, le système élastique de déverrouillage étant agencé entre le plateau et une cloison du guide traversée par le câble.

Quelle que soit l'alternative, l'organe de contact peut comporter une roue mobile en rotation autour d'un axe de roue par rapport à l'ensemble pivotant, ledit axe de roue étant distinct de l'axe de pivotement. L'axe de roue et l'axe de pivotement ne sont en outre pas parallèles.

Selon un autre objet, un giravion peut comprendre au moins un atterrisseur pivotable selon l'invention.

L'invention vise aussi le procédé mis en œuvre à savoir un procédé de verrouillage et de déverrouillage d'un atterrisseur muni d'une base et d'un ensemble pivotant portant un organe de contact qui est configuré pour être en contact avec le sol, ledit ensemble pivotant étant mobile en rotation autour d'un axe de pivotement par rapport à la base, ledit atterrisseur ayant un système d'immobilisation configuré pour immobiliser dans une plage prédéterminée de positions ledit ensemble pivotant par rapport à la base durant une phase verrouillée d'un mode verrouillé et pour autoriser sans limitation un pivotement de l'ensemble pivotant par rapport à la base durant une phase déverrouillée d'un mode déverrouillé, le système d'immobilisation comprenant un pion mobile et une commande configurée pour requérir une application du mode verrouillé ou du mode déverrouillé, le système d'immobilisation comprenant un passage ménagé dans un socle solidaire dudit ensemble pivotant, le pion étant en dehors dudit passage dans la phase déverrouillée, le pion étant mobile dans ledit passage en azimut par rapport à l'axe de pivotement dans la phase verrouillée.

Ce procédé comporte :
- lorsque le système d'immobilisation est dans le mode déverrouillé, activation de ladite commande pour passer dans le mode verrouillé, puis : i) si le pion est en vis-à-vis du passage, déplacement du pion dans le passage, ii) si le pion n'est pas en vis-à-vis du passage, placage du pion contre le socle avec un système élastique de verrouillage et déplacement du pion dans le passage dès que le pion vient en vis-à-vis du passage,
- lorsque le système d'immobilisation est dans le mode verrouillé, activation de ladite commande pour passer dans le mode déverrouillé, puis si le pion est dans le passage et en contact avec le socle alors compression d'un système élastique de déverrouillage, et: i) maintien du pion dans le passage tant que le pion subit un effort de cisaillement supérieur ou égal à un seuil, le système d'immobilisation étant dans une phase désarmée, ii) dès que le pion subit un effort de cisaillement inférieur au seuil, détente du système élastique de déverrouillage et expulsion du pion en dehors du passage sous l'effet de ladite détente pour passer dans une phase déverrouillée.

L'invention et ses avantages apparaîtront avec plus de détails dans le cadre de la description qui suit avec des exemples donnés à titre illustratif en référence aux figures annexées qui représentent :
la figure 1, un schéma illustrant un giravion selon l'invention,
la figure 2, un schéma illustrant le giravion de la figure 1 en vue de dessus,
la figure 3, un schéma illustrant un atterrisseur pivotant selon l'invention ayant un système d'immobilisation dans une phase verrouillée du mode verrouillé,
la figure 4, un schéma illustrant le système d'immobilisation de l'atterrisseur pivotant de la figure 3 dans une phase désarmée du mode déverrouillé,
la figure 5, un schéma illustrant le système d'immobilisation de l'atterrisseur pivotant de la figure 3 dans une phase déverrouillée du mode déverrouillé,
la figure 6, un schéma illustrant le système d'immobilisation de l'atterrisseur pivotant de la figure 3 dans une phase armée du mode verrouillé,
la figure 7, un schéma illustrant un système d'immobilisation dans une phase verrouillée du mode verrouillé,
la figure 8, un schéma illustrant le système d'immobilisation de la figure 7 dans une phase désarmée du mode déverrouillé,
la figure 9, un schéma illustrant le système d'immobilisation de la figure 7 dans une phase déverrouillée du mode déverrouillé,
la figure 10, un schéma illustrant le système d'immobilisation de la figure 7 dans une phase armée du mode verrouillé,
la figure 11, un schéma illustrant un système d'immobilisation dans une phase verrouillée du mode verrouillé,
la figure 12, un schéma illustrant le socle du système d'immobilisation de la figure 11,
la figure 13, un schéma illustrant le système d'immobilisation de la figure 11 dans une phase désarmée du mode déverrouillé,
la figure 14, un schéma illustrant le système d'immobilisation de la figure 11 dans une phase déverrouillée du mode déverrouillé, et
la figure 15, un schéma illustrant le système d'immobilisation de la figure 11 dans une phase armée du mode verrouillé.

Les éléments présents dans plusieurs figures distinctes sont affectés d'une seule et même référence.

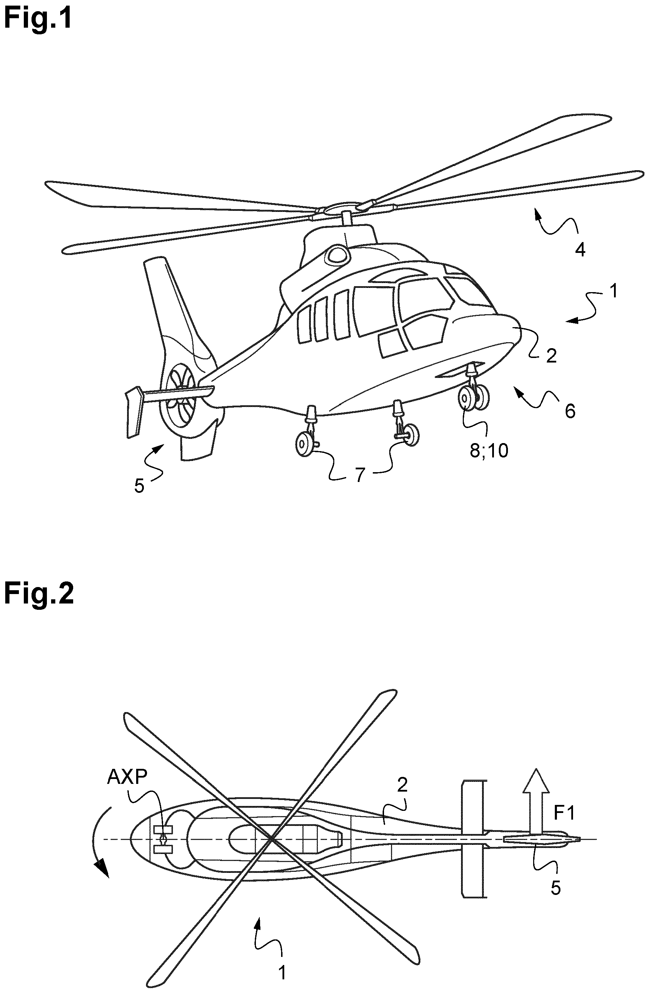

La figure 1 présente un giravion 1 selon l'invention. Ce giravion 1 comporte une cellule 2 portant éventuellement au moins un rotor et un système de contrôle du lacet. En l'occurrence, le giravion 1 illustré comporte un rotor principal 4 et un rotor arrière 5 faisant office de système de contrôle du lacet.

En outre, la cellule 2 repose sur un système d'atterrissage 6 comprenant par exemple au moins un atterrisseur, à savoir deux atterrisseurs principaux 7 et un atterrisseur auxiliaire 8 selon l'exemple.

Ce giravion 1 comprend en particulier au moins un atterrisseur 10 pivotant, à savoir l'atterrisseur auxiliaire 8 selon l'exemple.

En référence à la figure 2, lorsque le système de contrôle du lacet exerce une poussée latérale F1, alors l'atterrisseur 10 pivotant effectue au sol une rotation autour d'un axe de pivotement AXP pour modifier l'orientation du giravion 1.

L'atterrisseur 10 comporte dès lors un système d'immobilisation pour garder, dans certaines conditions, l'atterrisseur 10 pivotant sensiblement aligné selon l'axe de déplacement vers l'avant du giravion 1.

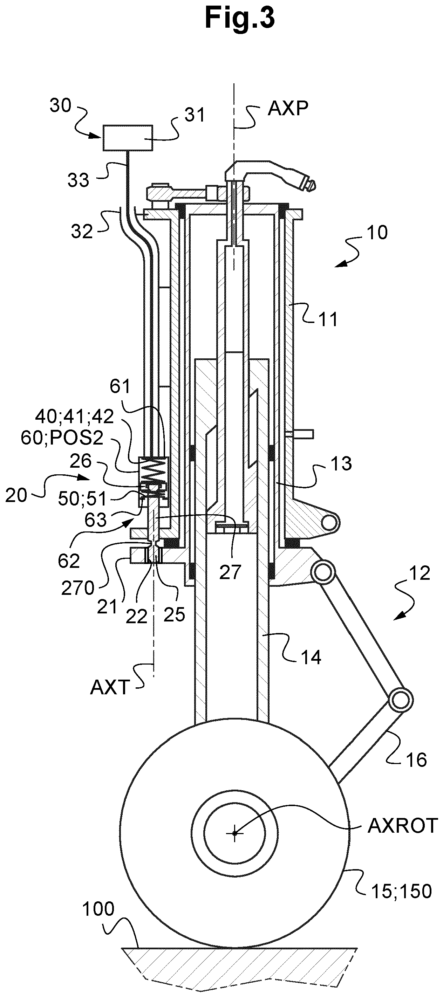

La figure 3 illustre un exemple de réalisation d'un atterrisseur 10 pivotant selon l'invention. Quelle que soit la réalisation, l'atterrisseur 10 est muni d'une base 11, connectée à la cellule 2, et d'un ensemble pivotant 12 pouvant effectuer un pivotement autour d'un axe de pivotement AXP par rapport à la base 11. L'ensemble pivotant 12 porte au moins un organe de contact 15 qui est configuré pour être en contact avec le sol 100. Par exemple, un organe de contact 15 comprend un patin, et/ou une roue 150 mobile en rotation par rapport à l'ensemble pivotant 12 autour d'un axe de roue AXROT.

La figure 3 donne à titre illustratif un exemple de base 11 et d'ensemble pivotant 12, mais d'autres réalisations de l'ensemble pivotant 12 sont envisageables. En particulier, la base 11 peut être fixe ou rétractable sans sortir du cadre de l'invention. Selon l'exemple illustré, l'ensemble pivotant 12 peut comprendre un cylindre 13 mobile en rotation autour de l'axe de pivotement par rapport à la base 11. De plus, l'ensemble pivotant 12 comporte un amortisseur 14 porté par le cylindre 13 et logé au moins partiellement dans ce cylindre 13, cet amortisseur 14 étant éventuellement pourvu d'un dispositif dit « anti-shimmy » en langue anglaise. En outre, un compas 16 est articulé au cylindre 13 et à l'amortisseur 14. Au moins un organe de contact 15 peut être porté par le compas 16 ou l'amortisseur 14 par exemple.

Indépendamment de la manière de réaliser l'ensemble pivotant 12 et la base 11, l'atterrisseur 10 comprend un système d'immobilisation 20 configuré pour : i) immobiliser, dans une plage prédéterminée de positions restreinte, l'ensemble pivotant 12 par rapport à la base 11 durant une phase verrouillée d'un mode verrouillé et pour ii) autoriser sans limitation un pivotement de l'ensemble pivotant 12 par rapport à la base 11 durant une phase déverrouillée d'un mode déverrouillé.

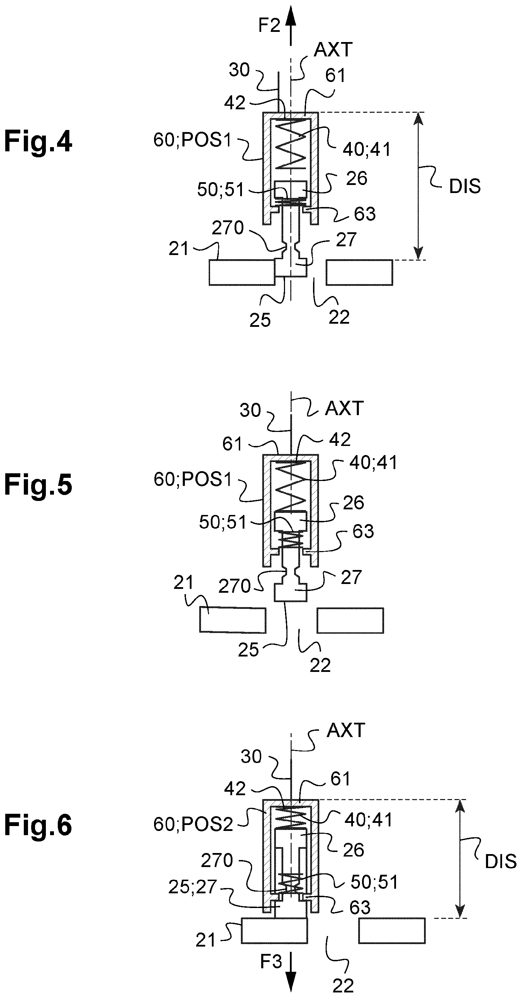

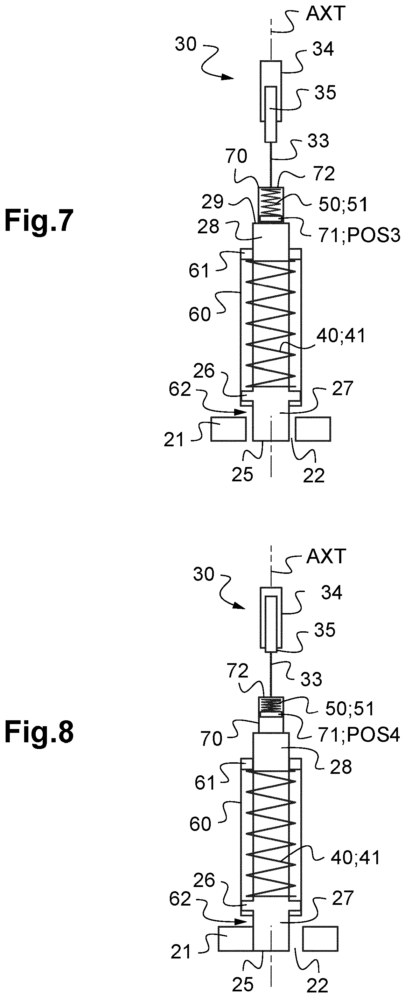

La figure 3 illustre une première version d'une première alternative explicitée dans les figures 4 à 6, mais d'autres réalisations sont visibles sur les figures 7 à 15.

Quelle que soit la réalisation, le système d'immobilisation 20 comprend un pion 25 mobile par rapport à l'ensemble pivotant 12 et une commande 30 configurée pour requérir une application du mode verrouillé ou du mode déverrouillé. Chaque mode peut comprendre deux phases explicitées par la suite. Par exemple, cette commande 30 peut comprendre au moins un câble 33 mobile en translation, au moins un renvoi... Le terme « câble » désigne un lien allongé, par exemple non élastique et/ou avantageusement logé dans une gaine de protection.

Le système d'immobilisation 20 comprend en outre un passage 22 ménagé dans un socle 21 qui est solidaire de l'ensemble pivotant 12. Par exemple, le socle 21 forme une pièce monobloc avec le cylindre 13 selon la figure 3.

Dès lors, le pion 25 est en dehors du passage 22 pendant une phase déverrouillée du mode déverrouillé, pour conférer une liberté de mouvement en rotation totale à l'ensemble pivotant 12 autour de l'axe de pivotement AXP.

A l'inverse, le pion 25 est disposé dans le passage 22 pendant la phase verrouillée du mode verrouillé illustrée sur la figure 3, pour conférer à l'ensemble pivotant 12 un blocage du mouvement en rotation autour de l'axe de pivotement AXP. L'ensemble pivotant possède alors une liberté de mouvement en rotation autour de l'axe de pivotement AXP restreinte à un jeu de fonctionnement. Le pion 25 est alors légèrement mobile dans le passage 22 en azimut par rapport à l'axe de pivotement AXP.

En outre, le système d'immobilisation 20 possède un système élastique de verrouillage 40, activé indirectement par la commande 30 durant le mode verrouillé, pour tendre à pousser le pion 25 dans le passage 22 dans ce mode verrouillé. Le procédé de l'invention comporte ainsi, à partir du mode déverrouillé, une activation de la commande 30 pour passer dans le mode verrouillé puis, si le pion 25 est en vis-à-vis du passage 22, un déplacement du pion 25 dans le passage 22 pour atteindre la phase verrouillée. Si le pion 25 n'est pas en vis-à-vis du passage 22, le système élastique de verrouillage 40 plaque le pion 25 contre le socle 21 durant une phase armée, puis déplace le pion 25 dans le passage 22 dès que le pion 25 vient en vis-à-vis du passage 22.

De plus, le système d'immobilisation 20 comporte un système élastique de déverrouillage 50 qui est activé indirectement par la commande 30 durant le mode déverrouillé, pour faire sortir le pion 25 du passage 22 et libérer ainsi l'ensemble pivotant 12. Le système élastique de déverrouillage 50 est configuré pour autoriser une extraction du pion 25 en dehors du passage 22 uniquement en présence d'un effort de cisaillement entre le socle 21 et le pion 25 inférieur à un seuil. Le procédé de l'invention comporte ainsi, à partir du mode verrouillé, une activation de la commande 30 pour passer dans le mode déverrouillé, puis si le pion 25 est dans le passage 22 et en contact avec le socle 21, une compression d'un système élastique de déverrouillage 50 durant une phase désarmée. Le pion 25 est maintenu dans le passage 22 tant que ce pion 25 subit un effort de cisaillement supérieur ou égal à un seuil. En revanche, dès que le pion 25 subit un effort de cisaillement inférieur au seuil, le système élastique de déverrouillage 50 se détend et expulse le pion 25 en dehors du passage 22 pour passer dans une phase déverrouillée.

Selon la première alternative des figures 3 à 10, le pion 25 est mobile en translation par rapport au socle 21 selon un axe de translation AXT, par exemple parallèle à l'axe de pivotement AXP. Le passage 22 peut alors être un alésage du socle 21.

Dès lors, le système d'immobilisation 20 comporte un support 60 creux. Ce support 60 comprend un guide tubulaire qui s'étend vers le socle 21, selon l'axe de translation AXT, d'un fond 61 de ce support 60 jusqu'à une extrémité ouverte 62 de ce support 60. Par suite, l'extrémité ouverte 62 se trouve, selon l'axe de translation AXT, entre le fond 61 et le socle 21.

Le pion 25 s'étend alors partiellement dans le support 60, au moins durant la phase verrouillée. Quelle que soit la variante de la première alternative, le pion 25 comprend une tête 26 coulissant dans le support 60 en étant guidé par le guide tubulaire. De plus, le pion 25 comprend une tige de blocage 27 solidaire de la tête, et donc connectée à la tête. Cette tige de blocage 27 sort du support 60 par l'extrémité ouverte 62, au moins durant la phase verrouillée, afin de pouvoir pénétrer dans le passage 22 du socle 21. Par sécurité, la tige de blocage 27 peut comprendre une zone fusible 270. La tige de blocage 27 peut aussi être guidée par un guide solidaire de la base.

Dans ces conditions, le système élastique de verrouillage 40 est agencé entre le fond 61 et la tête 26. Eventuellement, le système élastique de verrouillage 40 peut être fixé au fond 61. Par exemple, le système élastique de verrouillage 40 peut comporter un bloc élastique ou un ressort de verrouillage 41 présentant une spire 42 fixée au fond 61 de manière usuelle.

Selon la première variante de la première alternative de la figure 3, le support 60 est mobile en translation par rapport au socle 21, selon l'axe de translation AXT. Par exemple, le support 60 coulisse dans un guide solidaire de la base 11.

La commande 30 est connectée au support 60 afin de déplacer ce support d'une première position POS1 requérant l'application du mode déverrouillé à une deuxième position POS2 requérant l'application du mode verrouillé. Par exemple, la commande 30 comprend une poignée 31, ou un équivalent voire un actionneur linéaire ou autre, relié par un câble 33 au support 60 et par exemple au fond 61. Le câble 33 peut coulisser dans une gaine rigide 32.

En outre, le système élastique de déverrouillage 50 est agencé entre la tête 26 et un épaulement interne 63 du support 60. L'épaulement interne 63 est situé entre la tête 26 et le socle 21. La tige de blocage 27 traverse cet épaulement interne 63 et le système élastique de déverrouillage 50. Par exemple, le système élastique de déverrouillage 50 est fixé à l'épaulement interne 63, voire comporte un bloc élastique ou un ressort de déverrouillage 51 présentant une spire 52 fixée à l'épaulement interne 63.

Les figures 3 à 6 expliquent le fonctionnement de la première variante de la première alternative.

Dans la phase verrouillée de la figure 3, le support 60 est poussé par la commande 30 dans la deuxième position POS2. Le pion 25 est disposé en partie dans le passage 22. Le système élastique de verrouillage 40 et le système élastique de déverrouillage 50 sont légèrement comprimés pour maintenir le pion 25 en position, à savoir pour éviter une translation du pion 25 par rapport au support 60 sous l'effet de vibrations par exemple.

En référence à la figure 4, un pilote peut manipuler la commande 30 pour passer dans le mode déverrouillé. Le support 60 est déplacé dans la première position POS1 en étant éloigné du socle 21 selon la flèche F2. Une distance DIS entre le fond 61 et le socle 21 augmente. Dès lors, le système élastique de verrouillage 40 est au repos, en étant ni comprimé ni étendu. Eventuellement, le système élastique de verrouillage 40 ne touche plus le pion 25, ce système élastique de verrouillage 40 étant porté par le fond 61.

Si l'ensemble pivotant 12 est légèrement désaxé, le socle 21 est en appui contre le pion 25 tel qu'illustré sur la figure 4. Le socle 21 exerce un effort de cisaillement sur le pion 25. En présence d'un effort de cisaillement entre le socle 21 et le pion 25 supérieur ou égal un seuil, le pion 25 ne bouge pas. La translation du support 60 comprime alors le système élastique de déverrouillage 50. Ce système élastique de déverrouillage 50 est taré pour ne pas induire une translation du pion 25 dans ces conditions. En effet, le système élastique de déverrouillage 50 est taré pour autoriser une extraction du pion 25 hors du passage 22 uniquement en présence d'un effort de cisaillement entre le socle 21 et le pion 25 inférieur à ce seuil. Le système d'immobilisation 20 est alors dans une phase désarmée innovante. Par exemple, le système élastique de déverrouillage 50 est défini pour éviter un déverrouillage lorsque la poussée latérale F1 dépasse de 20% la poussée seuil permettant de faire pivoter l'ensemble pivotant autour de l'axe de pivotement AXP lorsque cet ensemble pivotant n'est pas verrouillé en pivotement.

En référence à la figure 5, dès que l'effort de cisaillement entre le socle 21 et le pion 25 devient inférieur au seuil, le système élastique de déverrouillage 50 se détend. Le support 60 étant rendu immobile par la commande 30, le système élastique de déverrouillage 50 exerce un effort sur le pion 25 pour le faire sortir du passage 22. Le système d'immobilisation 20 est alors dans une phase déverrouillée.

En fonction de la position relative du pion 25 et du socle 21 lors de l'activation du mode déverrouillé, le système d'immobilisation 20 peut passer directement de la phase verrouillée à la phase déverrouillée.

A partir de là, un pilote peut manipuler la commande 30 pour passer dans le mode verrouillé. Le support 60 est déplacé dans la deuxième position POS2 en étant rapproché du socle 21 selon la flèche F3 sur la figure 6. La distance DIS entre le fond et le socle 21 diminue.

Si le pion 25 est aligné avec le passage 22, le système d'immobilisation 20 peut passer dans la phase verrouillée de la figure 3. Dans la négative et en référence à la figure 6, le pion 25 entre en contact contre le socle 21. La translation du support 60 comprime alors le système élastique de verrouillage 40. En revanche, le système élastique de déverrouillage 50 est au repos, en étant ni comprimé ni étendu. Eventuellement, le système élastique de déverrouillage 50 ne touche plus le pion 25, ce système élastique de déverrouillage 50 étant retenu par l'épaulement interne 63. Le système d'immobilisation 20 est alors dans une phase armée permettant d'atteindre automatiquement la phase verrouillée lorsque le pion 25 sera au droit du passage 22.

Les figures 7 à 10 présentent une seconde variante de la première alternative. En référence à la figure 7, le support 60 est désormais immobile par rapport à la base 11, en étant par exemple solidaire de la base 11.

En plus de la tête 26 et de la tige de blocage 27 précitées, le pion 25 comprend une tige d'entrée 28 qui est aussi solidaire de la tête 26, à savoir connectée à la tête. La tige de blocage 27 et la tige d'entrée 28 sont situées de part et d'autre de la tête 26 selon l'axe de translation AXT. La tige d'entrée 28 traverse de plus le fond 61 pour s'étendre en partie en dehors du support 60.

Dès lors, la tige d'entrée 28 coopère avec la commande 30 et le système élastique de déverrouillage 50. En effet, cette tige d'entrée 28 peut comprendre un sommet 29 portant un tube 70. La commande 30 peut comprendre un câble 33 qui traverse une paroi du tube pour atteindre une plaque 71 guidée en translation dans le tube 70. Le câble 33 peut être relié à une poignée, ou à un arbre de sortie 35 d'un actionneur 34 piloté par une interface homme-machine par exemple.

Le système élastique de déverrouillage 50 peut être agencé entre ladite paroi 72 et la plaque 71. Le système élastique de déverrouillage 50 peut comprendre un ressort ou un équivalent, tel que par exemple un bloc élastique et par exemple en élastomère. Le système élastique de déverrouillage 50 peut avoir une raideur selon l'axe de translation AXT supérieure à une raideur selon l'axe de translation du système élastique de verrouillage 40.

Dans la phase verrouillée de la figure 7, le câble 33 est déplacé vers le socle 21 ou relâché. Dès lors, la plaque 71 est disposée au plus près du socle 21 dans une position de verrouillage POS3. Le système élastique de verrouillage 40 et le système élastique de déverrouillage 50 sont éventuellement légèrement comprimés pour maintenir le pion 25, à savoir pour éviter un déplacement indu du pion 25 sous l'effet de vibrations par exemple.

En référence à la figure 8, un pilote peut manipuler la commande 30 pour passer dans le mode déverrouillé. La plaque 71 remonte en étant déplacée dans la position déverrouillée POS4. Si l'ensemble pivotant 12 est légèrement désaxé, le socle 21 est en appui contre le pion 25. Le socle 21 exerce un effort de cisaillement sur le pion 25. En présence d'un effort de cisaillement entre le socle 21 et le pion 25 supérieur ou égal un seuil, le pion 25 ne bouge pas. La translation de la plaque 71 comprime alors le système élastique de déverrouillage 50. Le système d'immobilisation 20 est alors dans une phase désarmée innovante.

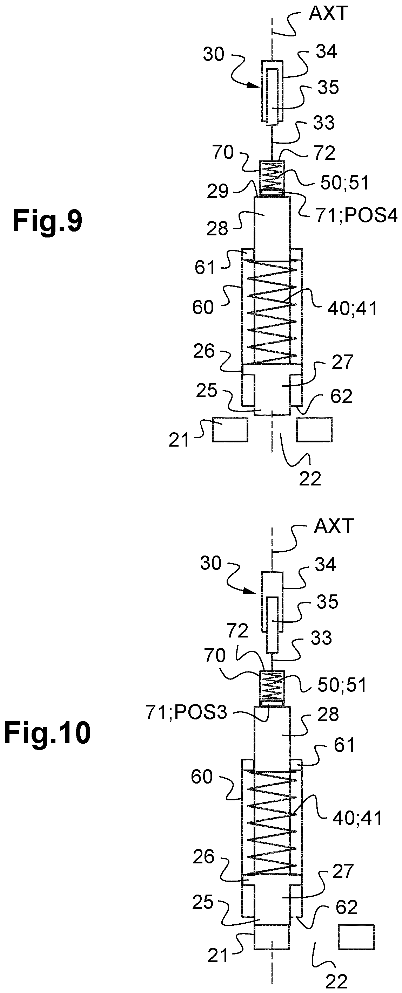

En référence à la figure 9, dès que l'effort de cisaillement entre le socle 21 et le pion 25 devient inférieur au seuil, le système élastique de déverrouillage 50 se détend et exerce un effort sur le pion 25 pour le faire sortir du passage 22. Le système d'immobilisation 20 est alors dans une phase déverrouillée.

En fonction de la position relative du pion 25 et du socle 21 lors de l'activation du mode déverrouillé, le système d'immobilisation 20 peut passer directement de la phase verrouillée à la phase déverrouillée.

A partir de là, un pilote peut manipuler la commande 30 pour passer dans le mode verrouillé. La plaque 71 est déplacée dans la position verrouillée POS3 en étant rapprochée du socle 21.

Si le pion 25 est aligné avec le passage 22, le système d'immobilisation 20 peut passer dans la phase verrouillée de la figure 7. Dans la négative et en référence à la figure 10, le pion 25 entre en contact contre le socle 21. La translation du pion 25 par rapport au support 60 comprime alors le système élastique de verrouillage 40. En revanche, le système élastique de déverrouillage 50 est au repos, en étant ni comprimé ni étendu, le câble 33 pouvant éventuellement être arcbouté. Le système d'immobilisation 20 est alors dans la phase armée.

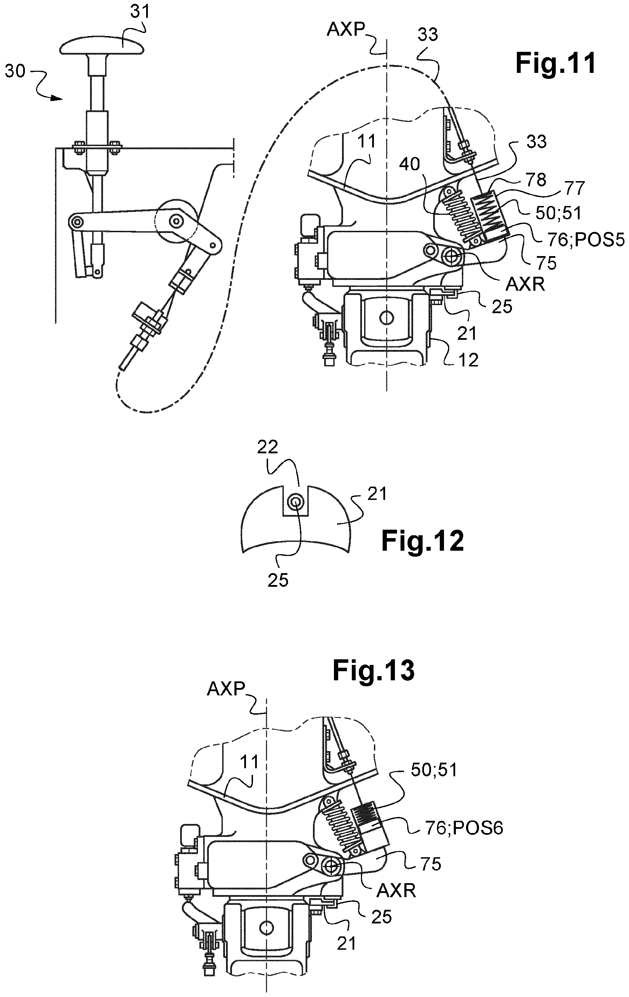

Les figures 11 à 15 illustrent une deuxième alternative comprenant un pion 25 mobile en rotation par rapport à la base notamment. En référence à la figure 12, le pion 25 peut pénétrer dans passage 22 formé par une encoche radiale du socle 21.

Selon la figure 11, le pion 25 est porté par un levier 75 en liaison pivot avec la base 11. Le système élastique de verrouillage 40 est alors agencé entre la base 11 et le levier 75.

Par ailleurs, la commande 30 comprend un câble 33 connecté à un plateau 76 mobile en translation dans un guide 77. Le système élastique de déverrouillage 50 est alors agencé entre le plateau 76 et une cloison 78 du guide 77 traversée par le câble 33. Le câble 33 peut être relié à une poignée selon l'exemple illustré, ou encore à un actionneur par exemple, éventuellement via un ou des renvois.

Le guide 77 est alors solidarisé au levier 75.

Dans la phase verrouillée de la figure 11, le câble 33 est tiré par le levier 75 ou relâché. Dès lors, le plateau 76 est disposé au plus près du levier 75 dans une position de verrouillage POS5. Le système élastique de verrouillage 40 et le système élastique de déverrouillage 50 sont éventuellement légèrement comprimés. Le levier 75 pivote pour positionner le pion 25 dans le passage 22.

En référence à la figure 13, un pilote peut manipuler la commande 30 pour passer dans le mode déverrouillé. Le plateau 76 est déplacé dans la position déverrouillée POS6. Si l'ensemble pivotant 12 est légèrement désaxé, le socle 21 est en appui contre le pion 25. La translation du plateau 76 comprime alors le système élastique de déverrouillage 50. Le système d'immobilisation 20 est alors dans une phase désarmée innovante.

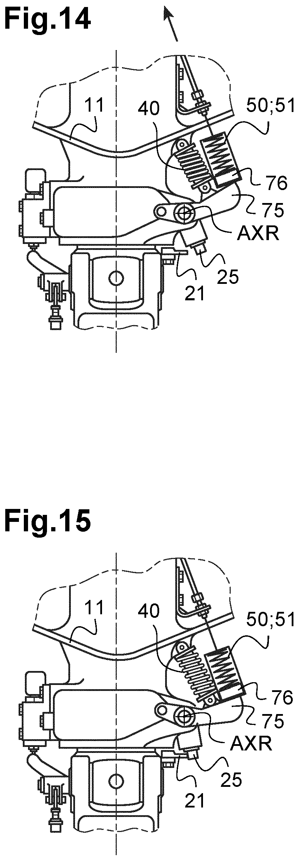

En référence à la figure 14, dès que l'effort de cisaillement entre le socle 21 et le pion 25 devient inférieur au seuil, le système élastique de déverrouillage 50 se détend et exerce un effort sur le guide 77 qui fait basculer le levier 75 pour sortir le pion 25 du passage 22. Le système d'immobilisation 20 est alors dans une phase déverrouillée. A partir de là, un pilote peut manipuler la commande 30 pour passer dans le mode verrouillé. Le plateau 76 est piloté pour être déplacé à nouveau dans la position verrouillée POS5. Si le pion 25 est aligné avec le passage 22, le système d'immobilisation 20 peut passer dans la phase verrouillée de la figure 11. Dans la négative, le pion 25 entre en contact contre le socle 21. Le levier 75 comprime alors le système élastique de verrouillage 40. Le système d'immobilisation 20 est alors dans la phase armée illustrée sur la figure 15. Naturellement, la présente invention est sujette à de nombreuses variations quant à sa mise en œuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit à condition de ne pas sortir du cadre de la présente invention telle que définie par les revendications.

## Revendications

1. Atterrisseur (10) muni d'une base (11) et d'un ensemble pivotant (12) portant un organe de contact (15) qui est configuré pour être en contact avec le sol (100), ledit ensemble pivotant (12) étant mobile en rotation autour d'un axe de pivotement (AXP) par rapport à la base (11), ledit atterrisseur (10) ayant un système d'immobilisation (20) comprenant un pion (25) mobile et une commande (30) configurée pour requérir une application d'un mode verrouillé ou d'un mode déverrouillé, le système d'immobilisation (20) comprenant un passage (22), le pion (25) étant en dehors dudit passage (22) dans une phase déverrouillée du mode déverrouillé, le pion (25) étant mobile dans ledit passage en azimut par rapport à l'axe de pivotement (AXP) dans une phase verrouillée du mode verrouillé, le système d'immobilisation (20) ayant un système élastique de verrouillage (40) poussant le pion (25) dans le mode verrouillé soit contre le socle (21) durant une phase armée du mode verrouillé tant que le pion (25) ne pénètre pas dans le passage (22) soit dans le passage (22) dès que le pion est en face du passage (22) dans la phase verrouillée, le système d'immobilisation (20) comportant un système élastique de déverrouillage (50) configuré pour faire sortir ledit pion (25) du passage (22) lorsque le mode déverrouillé est commandé par la commande (30),
**caractérisé en ce que** le passage (22) est ménagé dans un socle (21) solidaire de l'ensemble pivotant, le système élastique de déverrouillage (50) étant taré pour autoriser une extraction du pion (25) hors du passage (22) uniquement en présence d'un effort de cisaillement entre le socle (21) et le pion (25) inférieur à un seuil.

2. Atterrisseur selon la revendication 1,
**caractérisé en ce que** ledit pion (25) est mobile en translation par rapport au socle (21) selon un axe de translation (AXT).

3. Atterrisseur selon la revendication 2,
**caractérisé en ce que** ledit système d'immobilisation (20) comporte un support (60) creux qui s'étend vers le socle (21) selon l'axe de translation (AXT) d'un fond (61) jusqu'à une extrémité ouverte (62), l'extrémité ouverte (62) étant agencée entre le fond (61) et le socle (21), le pion (25) comprenant une tête (26) solidaire d'une tige de blocage (27), la tête (26) étant présente dans le support (60) creux et la tige de blocage (27) sortant du support (60) creux par l'extrémité ouverte (62) au moins dans la phase verrouillée, le système élastique de verrouillage (40) étant agencé entre le fond (61) et la tête (26).

4. Atterrisseur selon la revendication 3,
**caractérisé en ce que** le système élastique de verrouillage comporte un ressort de verrouillage (41) présentant une spire (42) fixée au fond (61).

5. Atterrisseur selon l'une quelconque des revendications 3 à 4,
**caractérisé en ce que** le support (60) est mobile en translation par rapport à la base (11), ladite commande (30) étant connectée au support (60).

6. Atterrisseur selon la revendication 5,
**caractérisé en ce que** le système élastique de déverrouillage (50) est agencé entre la tête (26) et un épaulement interne (63) dudit support (60), la tige de blocage (27) traversant ledit épaulement interne (63), l'épaulement interne (63) étant situé entre ladite tête (26) et ledit socle (21).

7. Atterrisseur selon la revendication 6,
**caractérisé en ce que** le système élastique de déverrouillage (50) comporte un ressort de déverrouillage (51) présentant une spire (52) fixée à l'épaulement interne (63).

8. Atterrisseur selon l'une quelconque des revendications 2 à 4,
**caractérisé en ce que** le support (60) est immobile par rapport à la base (11), le pion (25) comprenant une tige d'entrée (28) solidaire de la tête (26) et traversant le fond (61) du support (60).

9. Atterrisseur selon la revendication 8,
**caractérisé en ce que** la tige d'entrée (28) s'étend de la tête (26) jusqu'à un sommet (29) solidaire d'un tube (70) creux, ladite commande comportant un câble (33) qui s'étend jusqu'à une plaque (71) mobile en translation dans le tube (70) en traversant une paroi (72) du tube (70), le système élastique de déverrouillage (50) étant agencé entre ladite paroi (72) et ladite plaque (71).

10. Atterrisseur selon l'une quelconque des revendications 2 à 9,
**caractérisé en ce que** le système élastique de déverrouillage (50) a une raideur selon l'axe de translation (AXT) supérieure à une raideur selon l'axe de translation du système élastique de verrouillage (40).

11. Atterrisseur selon la revendication 1,
**caractérisé en ce que** le pion (25) est porté par un levier (75) en liaison pivot avec la base (11), le système élastique de verrouillage (40) étant agencé entre la base (11) et le levier (75), la commande (30) comprenant un câble (33) connecté à un plateau (76) mobile en translation dans un guide (77), le guide (77) étant connecté au levier (75), le système élastique de déverrouillage (50) étant agencé entre le plateau (76) et une cloison (78) du guide (77) traversée par le câble (33).

12. Atterrisseur selon l'une quelconque des revendications 1 à 11,
**caractérisé en ce que** ledit organe de contact (15) comporte une roue (150) mobile en rotation autour d'un axe de roue (AXROT) par rapport à l'ensemble pivotant (12), ledit axe de roue (AXROT) étant distinct de l'axe de pivotement (AXP).

13. Giravion (1),
**caractérisé en ce que** ledit giravion (1) comprend au moins un atterrisseur (10) pivotable selon l'une quelconque des revendications 1 à 12.

14. Procédé de verrouillage et de déverrouillage d'un atterrisseur (10) muni d'une base (11) et d'un ensemble pivotant (12) portant un organe de contact (15) qui est configuré pour être en contact avec le sol (100), ledit ensemble pivotant (12) étant mobile en rotation autour d'un axe de pivotement (AXP) par rapport à la base (11), ledit atterrisseur (10) ayant un système d'immobilisation (20) configuré pour immobiliser dans une plage prédéterminée de positions ledit ensemble pivotant (12) par rapport à la base (11) durant une phase verrouillée d'un mode verrouillé et pour autoriser sans limitation un pivotement de l'ensemble pivotant (12) par rapport à la base (11) durant une phase déverrouillée d'un mode déverrouillé, le système d'immobilisation (20) comprenant un pion (25) mobile et une commande (30) configurée pour requérir une application du mode verrouillé ou du mode déverrouillé, le système d'immobilisation (20) comprenant un passage (22) ménagé dans un socle (21) solidaire de l'ensemble pivotant, le pion (25) étant en dehors dudit passage (22) dans la phase déverrouillée, le pion (25) étant mobile dans ledit passage (22) en azimut par rapport à l'axe de pivotement (AXP) dans la phase verrouillée,
le procédé comportant :
- lorsque le système d'immobilisation (20) est dans le mode déverrouillé, activation de ladite commande (30) pour passer dans le mode verrouillé, puis : i) si le pion (25) est en vis-à-vis du passage (22), déplacement du pion (25) dans le passage (22), ii) si le pion (25) n'est pas en vis-à-vis du passage (22), placage du pion (25) contre le socle (21) avec un système élastique de verrouillage (40) et déplacement du pion (25) dans le passage (22) dès que le pion (25) vient en vis-à-vis du passage (22),
- lorsque le système d'immobilisation (20) est dans le mode verrouillé, activation de ladite commande (30) pour passer dans le mode déverrouillé, puis si le pion (25) est dans le passage (22) et en contact avec le socle (21) alors compression d'un système élastique de déverrouillage (50), et: i) maintien du pion (25) dans le passage (22) tant que le pion (25) subit un effort de cisaillement supérieur ou égal à un seuil, le système d'immobilisation (20) étant dans une phase désarmée, ii) dès que le pion (25) subit un effort de cisaillement inférieur au seuil, détente du système élastique de déverrouillage (50) et expulsion du pion en dehors du passage (22) sous l'effet de ladite détente pour passer dans la phase déverrouillée.

## Patentansprüche

1. Landegestell (10) mit einer Basis (11) und einer Schwenkeinheit (12), die ein für den Kontakt mit dem Erdboden (100) konfiguriertes Kontaktelement (15) trägt, wobei die Schwenkeinheit (12) relativ zur Basis (11) um eine Schwenkachse (AXP) drehbar ist, wobei das Landegestell (10) ein Feststellsystem (20) aufweist, das einen beweglichen Stift (25) und eine Steuerung (30) umfasst, die konfiguriert ist, um die Anwendung eines verriegelten Modus oder eines entriegelten Modus vorzugeben, das Feststellsystem (20) einen Durchgang (22) aufweist, und der Stift (25) sich in einer entriegelten Phase des entriegelten Modus außerhalb des Durchgangs (22) befindet, der Stift (25) in einer verriegelten Phase des verriegelten Modus in diesem Durchgang in Bezug auf die Schwenkachse (AXP) azimutal beweglich ist, das Feststellsystem (20) ein elastisches Verriegelungssystem (40) aufweist, das den Stift (25) im verriegelten Modus entweder in einer gespannten Phase des verriegelten Modus gegen den Sockel (21), solange der Stift (25) nicht in den Durchgang (22) eintritt, oder in den Durchgang (22) drückt, sobald sich der Stift in der verriegelten Phase gegenüber dem Durchgang (22) befindet, wobei das Feststellsystem (20) ein elastisches Entriegelungssystem (50) umfasst, das konfiguriert ist, um den Stift (25) aus dem Durchgang (22) herauszudrücken, wenn die Steuerung (30) den entriegelten Modus vorgibt,
**dadurch gekennzeichnet, dass** der Durchgang (22) in einem mit der Schwenkeinheit fest verbundenen Sockel (21) ausgebildet ist, und das elastische Entriegelungssystem (50) so eingestellt ist, dass ein Herausziehen des Stifts (25) aus dem Durchgang (22) nur dann möglich ist, wenn zwischen dem Sockel (21) und dem Stift (25) eine Scherkraft unterhalb eines Schwellenwerts wirkt.

2. Landegestell nach Anspruch 1,
**dadurch gekennzeichnet, dass** der Stift (25) in Bezug auf den Sockel (21) entlang einer Translationsachse (AXT) bewegbar ist.

3. Landegestell nach Anspruch 2,
**dadurch gekennzeichnet, dass** das Feststellsystem (20) einen hohlen Träger (60) umfasst, der sich entlang der Translationsachse (AXT) von einem Boden (61) in Richtung des Sockels (21) bis zu einem offenen Ende (62) erstreckt, wobei das offene Ende (62) zwischen dem Boden (61) und dem Sockel (21) angeordnet ist, der Stift (25) einen Kopf (26) umfasst, der fest mit einer Verriegelungsstange (27) verbunden ist, der Kopf (26) sich im hohlen Träger (60) befindet und die Verriegelungsstange (27) zumindest in der verriegelten Phase aus dem hohlen Träger (60) durch das offene Ende (62) herausragt, und das elastische Verriegelungssystem (40) zwischen dem Boden (61) und dem Kopf (26) angeordnet ist.

4. Landegestell nach Anspruch 3,
**dadurch gekennzeichnet, dass** das elastische Verriegelungssystem eine Verriegelungsfeder (41) mit einer am Boden (61) befestigten Windung (42) umfasst.

5. Landegestell nach einem der Ansprüche 3 bis 4,
**dadurch gekennzeichnet, dass** der Träger (60) in Bezug auf die Basis (11) translatorisch beweglich ist, wobei die Steuerung (30) mit dem Träger (60) verbunden ist.

6. Landegestell nach Anspruch 5,
**dadurch gekennzeichnet, dass** das elastische Entriegelungssystem (50) zwischen dem Kopf (26) und einer inneren Schulter (63) des Trägers (60) angeordnet ist, wobei die Verriegelungsstange (27) die innere Schulter (63) durchquert und die innere Schulter (63) sich zwischen dem Kopf (26) und dem Sockel (21) befindet.

7. Landegestell nach Anspruch 6,
**dadurch gekennzeichnet, dass** das elastische Entriegelungssystem (50) eine Entriegelungsfeder (51) mit einer an der inneren Schulter (63) befestigten Windung (52) umfasst.

8. Landegestell nach einem der Ansprüche 2 bis 4,
**dadurch gekennzeichnet, dass** der Träger (60) in Bezug auf die Basis (11) unbeweglich ist, und der Stift (25) eine Eingangsstange (28) umfasst, die mit dem Kopf (26) fest verbunden ist und den Boden (61) des Trägers (60) durchquert.

9. Landegestell gemäß Anspruch 8,
**dadurch gekennzeichnet, dass** sich die Eingangsstange (28) vom Kopf (26) bis zu einem mit einem hohlen Rohr (70) verbundenen Scheitel (29) erstreckt, wobei die genannte Steuerung ein Kabel (33) umfasst, das sich bis zu einer Platte (71) erstreckt, die im Rohr (70) translatorisch beweglich ist, und dabei eine Wand (72) des Rohrs (70) durchquert, wobei das elastische Entriegelungssystem (50) zwischen der genannten Wand (72) und der genannten Platte (71) angeordnet ist.

10. Landegestell nach einem der Ansprüche 2 bis 9,
**dadurch gekennzeichnet, dass** das elastische Entriegelungssystem (50) eine Steifigkeit entlang der Translationsachse (AXT) aufweist, die größer ist als eine Steifigkeit entlang der Translationsachse des elastischen Verriegelungssystems (40).

11. Landegestell nach Anspruch 1,
**dadurch gekennzeichnet, dass** der Stift (25) von einem Hebel (75) getragen ist, der mit der Basis (11) schwenkbar verbunden ist, wobei das elastische Verriegelungssystem (40) zwischen der Basis (11) und dem Hebel (75) angeordnet ist, die Steuerung (30) ein Kabel (33) umfasst, das mit einer in einer Führung (77) translatorisch beweglichen Platte (76) verbunden ist, dass die Führung (77) mit dem Hebel (75) verbunden ist, und dass das elastische Entriegelungssystem (50) zwischen der Platte (76) und einer Wand (78) der Führung (77) angeordnet ist, durch die das Kabel (33) verläuft.

12. Landegestell nach einem der Ansprüche 1 bis 11,
**dadurch gekennzeichnet, dass** das Kontaktelement (15) ein Rad (150) umfasst, das in Bezug auf die Schwenkeinheit (12) um eine Radachse (AXROT) drehbar ist, wobei sich die Radachse (AXROT) von der Schwenkachse (AXP) unterscheidet.

13. Drehflügler (1),
**dadurch gekennzeichnet, dass** der Drehflügler (1) mindestens ein Landegestell (10) umfasst, das gemäß einem der Ansprüche 1 bis 12 schwenkbar ist.

14. Verfahren zum Verriegeln und Entriegeln eines Landegestells (10) mit einer Basis (11) und einer Schwenkeinheit (12), die ein Kontaktelement (15) trägt, das für den Kontakt mit dem Erdboden (100) konfiguriert ist, wobei die Schwenkeinheit (12) relativ zur Basis (11) um eine Schwenkachse (AXP) drehbar ist, wobei das Landegestell (10) ein Feststellsystem (20) aufweist, das konfiguriert ist, um die Schwenkeinheit (12) relativ zur Basis (11) in einer verriegelten Phase eines verriegelten Modus zu blockieren und in einer entriegelten Phase eines entriegelten Modus ein unbegrenztes Schwenken der Schwenkeinheit (12) in Bezug auf die Basis (11) zuzulassen, wobei das Feststellsystem (20) einen beweglichen Stift (25) und eine Steuerung (30) umfasst, die konfiguriert ist, um die Anwendung des verriegelten Modus oder des entriegelten Modus vorzugeben, wobei das Feststellsystem (20) einen Durchgang (22) umfasst, der in einem fest mit der Schwenkeinheit verbundenen Sockel (21) ausgebildet ist, wobei der Stift (25) sich in der entriegelten Phase außerhalb des Durchgangs (22) befindet, und der Stift (25) in der verriegelten Phase in Bezug auf die Schwenkachse (AXP) in dem Durchgang (22) azimutal beweglich ist,
wobei das Verfahren umfasst:
- wenn sich das Feststellsystem (20) im entriegelten Modus befindet, Aktivieren der Steuerung (30), um in den verriegelten Modus zu wechseln, dann: i) wenn der Stift (25) dem Durchgang (22) gegenüberliegt, Verschieben des Stifts (25) in den Durchgang (22), ii) wenn der Stift (25) dem Durchgang (22) nicht gegenüberliegt, Anlegen des Stifts (25) an den Sockel (21) mit einem elastischen Verriegelungssystem (40) und Bewegen des Stifts (25) in den Durchgang (22), sobald der Stift (25) dem Durchgang (22) gegenüberliegt,
- wenn sich das Feststellsystem (20) im verriegelten Modus befindet, Aktivieren der Steuerung (30), um in den entriegelten Modus zu wechseln, dann, wenn sich der Stift (25) im Durchgang (22) und in Kontakt mit dem Sockel (21) befindet, Komprimieren eines elastischen Entriegelungssystems (50), und: i) Halten des Stifts (25) im Durchgang (22), solange der Stift (25) einer Scherkraft ausgesetzt ist, die größer oder gleich einem Schwellenwert ist, wobei sich das Feststellsystem (20) in einer ungesicherten Phase befindet, ii) sobald der Stift (25) einer Scherkraft ausgesetzt ist, die unter dem Schwellenwert liegt, Entspannen des elastischen Entriegelungssystems (50) und Ausstoßen des Stifts aus dem Durchgang (22) unter der Wirkung des Entspannens, um in die entriegelte Phase überzugehen.

## Claims

1. Landing gear (10) provided with a stand (11) and a pivoting assembly (12) carrying a contact member (15) that is configured to be in contact with the ground (100), said pivoting assembly (12) being able to rotate about a pivot axis (AXP) in relation to the stand (11), said landing gear (10) having an immobilization system (20) comprising a movable pin (25) and a control (30) configured to request the application of a locked mode or an unlocked mode, the immobilization system (20) comprising a passage (22), the pin (25) being outside said passage (22) in an unlocked phase of the unlocked mode, the pin (25) being able to move in the passage in azimuth relative to the pivot axis (AXP) in a locked phase of the locked mode, the immobilization system (20) having an elastic locking system (40) pushing the pin (25), when in the locked mode, either against the base (21) during an armed phase of the locked mode as long as the pin (25) does not enter the passage (22), or into the passage (22) as soon as the pin (25) is in line with the passage (22) in the locked phase, the immobilization system (20) comprising an elastic unlocking system (50) configured to move said pin (25) out of the passage (22) when activation of the unlocked mode is commanded by the control (30),
**characterized in that** the passage (22) is provided in a base (21) secured to the pivoting assembly, the elastic unlocking system (50) being calibrated to allow the pin (25) to be extracted from the passage (22) only when there is a shearing force between the base (21) and the pin (25) below a threshold.

2. Landing gear according to Claim 1,
**characterized in that** said pin (25) is able to move in translation in relation to the base (21) along a translation axis (AXT).

3. Landing gear according to claim 2,
**characterized in that** said immobilization system (20) comprises a hollow support (60) that extends towards the base (21) along the translation axis (AXT) from an end wall (61) to an open end (62), the open end (62) being arranged between the end wall (61) and the base (21), the pin (25) comprising a head (26) integral with a locking rod (27), the head (26) being located in the hollow support (60) and the locking rod (27) emerging through the open end (62) of the hollow support (60) at least in the locked phase, the elastic locking system (40) being arranged between the end wall (61) and the head (26).

4. Landing gear according to Claim 3,
**characterized in that** the elastic locking system comprises a locking spring (41) with a coil (42) fastened to the end wall (61).

5. Landing gear according to any one of Claims 3 to 4,
**characterized in that** the support (60) is able to move in translation in relation to the stand (11), said control (30) being connected to the support (60).

6. Landing gear according to Claim 5,
**characterized in that** the elastic unlocking system (50) is arranged between the head (26) and an inner shoulder (63) of said support (60), the locking rod (27) passing through said inner shoulder (63), the inner shoulder (63) being situated between said head (26) and said base (21).

7. Landing gear according to Claim 6,
**characterized in that** the elastic unlocking system (50) comprises an unlocking spring (51) with a coil (52) fastened to the inner shoulder (63).

8. Landing gear according to any one of Claims 2 to 4,
**characterized in that** the support (60) is stationary in relation to the stand (11), the pin (25) comprising an entry rod (28) integral with the head (26) and passing through the end wall (61) of the support (60).

9. Landing gear according to Claim 8,
**characterized in that** the entry rod (28) extends from the head (26) to a top (29) integral with a hollow tube (70), said control comprising a cable (33) that extends up to a plate (71) that is able to move in translation in the tube (70), passing through a wall (72) of the tube (70), the elastic unlocking system (50) being arranged between said wall (72) and said plate (71).

10. Landing gear according to any one of Claims 2 to 9,
**characterized in that** a stiffness of the elastic unlocking system (50) along the translation axis (AXT) is greater than a stiffness of the elastic locking system (40) along the translation axis.

11. Landing gear according to Claim 1,
**characterized in that** the pin (25) is carried by a lever (75) pivotally connected to the stand (11), the elastic locking system (40) being arranged between the stand (11) and the lever (75), the control (30) comprising a cable (33) connected to a panel (76) that is able to move in translation in a guide (77), the guide (77) being connected to the lever (75), the elastic unlocking system (50) being arranged between the panel (76) and a partition (78) of the guide (77) through which the cable (33) passes.

12. Landing gear according to any one of Claims 1 to 11,
**characterized in that** said contact member (15) comprises a wheel (150) that is able to rotate about a wheel axis (AXROT) in relation to the pivoting assembly (12), said wheel axis (AXROT) being distinct from the pivot axis (AXP).

13. Rotorcraft (1),
**characterized in that** said rotorcraft (1) comprises at least one pivoting landing gear (10) according any one of Claims 1 to 12.

14. Method for locking and unlocking a landing gear (10) provided with a stand (11) and a pivoting assembly (12) carrying a contact member (15) that is configured to be in contact with the ground (100), said pivoting assembly (12) being able to rotate about a pivot axis (AXP) in relation to the stand (11), said landing gear (10) having an immobilization system (20) configured to immobilize said pivoting assembly (12) within a predetermined range of positions in relation to the stand (11) during a locked phase of a locked mode and to authorize unlimited pivoting of the pivoting assembly (12) in relation to the stand (11) during an unlocked phase of an unlocked mode, the immobilization system (20) comprising a movable pin (25) and a control (30) configured to request the application of the locked mode or the unlocked mode, the immobilization system (20) comprising a passage (22) provided in a base (21) integral with the pivoting assembly, the pin (25) being outside said passage (22) in the unlocked phase, the pin (25) being able to move in said passage in azimuth relative to the pivot axis (AXP) in the locked phase,
the method comprising:
- when the immobilization system (20) is in the unlocked mode, activating said control (30) in order to switch to the locked mode, then: i) if the pin (25) is in line with the passage (22), moving the pin (25) into the passage (22); ii) if the pin (25) is not in line with the passage (22), pressing the pin (25) against the base (21) with an elastic locking system (40) and moving the pin (25) into the passage (22) as soon as the pin (25) comes into line with the passage (22);
- when the immobilization system (20) is in the locked mode, activating said control (30) in order to switch to the unlocked mode, then if the pin (25) is in the passage (22) and in contact with the base (21), compressing an elastic unlocking system (50), and: i) keeping the pin (25) in the passage (22) as long as the pin (25) is subject to a shearing force greater than or equal to a threshold, the immobilization system (20) being in a disarmed phase; ii) as soon as the pin (25) is subject to a shearing force below the threshold, expanding the elastic unlocking system (50) and ejecting the pin out of the passage (22) under the effect of said expansion to switch to the unlocked phase.
